# EUROPÄISCHE PATENTANMELDUNG

(11) **EP 3 447 452 A1**
(43) Veröffentlichungstag der Anmeldung: **27.02.2019**
(21) Anmeldenummer: 18175903.6
(22) Anmeldetag: 05.06.2018
(51) Int. Cl.: G01D 11/24

(54) **SENSORGEHÄUSE**

(30) Priorität: 04.07.2017 DE 102017114906
(71) Anmelder: Sick AG, 79183 Waldkirch (DE)
(72) Erfinder: Marschner, Wolfgang, 79111 Freiburg (DE)

(57) **Zusammenfassung**

Sensorgehäuse (1) mit mindestens einem Sensorelement, wobei ein Teil des Sensorgehäuses (1) in eine Befestigungsnut (2) eines metallischen Befestigungskörpers (3) ragt zur Befestigung des Sensorgehäuses (1), wobei an dem Sensorgehäuse (1) ein drehbarer Klemmkörper (4) vorgesehen ist, wobei der Klemmkörper (4) ein Betätigungselement (5) zur Drehung des Klemmkörpers (4) aufweist, wobei eine Drehachse (6) für den Klemmkörper (4) quer zu einer Längsachse der Befestigungsnut (2) liegt, wobei der Klemmkörper bei in die Befestigungsnut (2) eingesetztem Sensorgehäuse (1) durch Verdrehen in eine Klemmstellung verbringbar ist, in der dieser mit gegenüberliegenden Innenflächen (7) der Befestigungsnut (2) verspannbar ist, wobei der Klemmkörper (4) mindestens vier bezüglich seiner Drehachse (6) radial nach außen weisenden Klemmflächen (8, 9, 10, 11, 12, 13) aufweist, die sich an bezüglich der Drehachse gegenüberliegenden Stellen des Klemmkörpers (4) befinden, über die der Klemmkörper (4) in einer Klemmstellung zwischen den Innenflächen (7) der Nutwand (12) verspannbar ist, wobei jeweils zwei Klemmflächen gegenüberliegend angeordnet sind, wobei die Klemmflächen (8, 9, 10, 11, 12, 13), die auf einer Seite des Klemmkörpers angeordnet sind, unterschiedliche Winkel zur Drehachse (6) aufweisen.

## Beschreibung

Die vorliegende Erfindung betrifft ein Sensorgehäuse nach dem Oberbegriff von Anspruch 1.

Ein derartiger Sensor ist aus der DE 102 31 481 B3 bekannt.

Zur Befestigung von Endlagensensoren für Pneumatikzylinder steht bei Miniaturzylindern meist eine C-förmige Nut zur Verfügung. Diese Nuten existieren in den verschiedensten Varianten, so dass für viele Nuten nur ein speziell hierfür ausgelegter Sensor darin befestigt werden kann.

Marktüblich sind magnetische Zylindersensoren mit länglichem Gehäuse in Form der C-Nut. Diese werden stirnseitig in die Nut eingeführt und mit einem Gewindestift, der am Ende des Gehäuses positioniert ist, festgeklemmt. Eine weitere Bauform dieser Sensoren kann radial montiert werden. Diese können mit einem speziellen Mechanismus in der Nut festgeklemmt werden. Ein solcher Sensor ist aus der EP 2 068 127 B1 bekannt.

Durch die große Varianz an C-Nuten kann ein Sensor meist nur sehr wenige dieser Nut-Varianten abdecken. Ist die Nut zu breit oder zu hoch versagt die Befestigung. Die Sensorgehäuse für eine stirnseitige Montage lassen sich meist auch nur in wenigen C-Nuten fixieren, da hier die Gehäuseform sehr nahe an der Nutgeometrie liegen muss.

Wird ein Gerät mit Exzenterbefestigung in einer Nut mit einer sehr schmalen Nutschulter verwendet, wird diese meist durch den Exzenter aufgrund der hier sehr kleinen Berührungsfläche verformt. Eine sichere Befestigung ist so nicht möglich und eine Neupositionierung dicht neben dieser unerwünschten Verformung wird in aller Regel schwierig.

Eine Aufgabe der Erfindung besteht darin, ein Sensorgehäuse bereitzustellen, das in fast allen C-Nutvarianten sicher fixiert werden kann.

Die Aufgabe wird gemäß Anspruch 1 gelöst durch ein Sensorgehäuse mit mindestens einem Sensorelement, wobei ein Teil des Sensorgehäuses in eine Befestigungsnut eines metallischen Befestigungskörpers ragt zur Befestigung des Sensorgehäuses, wobei an dem Sensorgehäuse ein drehbarer Klemmkörper vorgesehen ist, wobei der Klemmkörper ein Betätigungselement zur Drehung des Klemmkörpers aufweist, wobei eine Drehachse für den Klemmkörper quer zu einer Längsachse der Befestigungsnut liegt, wobei der Klemmkörper bei in die Befestigungsnut eingesetztem Sensorgehäuse durch Verdrehen in eine Klemmstellung verbringbar ist, in der dieser mit gegenüberliegenden Innenflächen der Befestigungsnut verspannbar ist, wobei der Klemmkörper mindestens vier bezüglich seiner Drehachse radial nach außen weisenden Klemmflächen aufweist, die sich an bezüglich der Drehachse gegenüberliegenden Stellen des Klemmkörpers befinden, über die der Klemmkörper in einer Klemmstellung zwischen den Innenflächen der Nutwand verspannbar ist, wobei jeweils zwei Klemmflächen gegenüberliegend angeordnet sind, wobei mindestens zwei Klemmflächen, die auf einer Seite des Klemmkörpers angeordnet sind, jeweils unterschiedliche Winkel zur Drehachse aufweisen.

Gemäß der Erfindung sind am Umfang des Klemmkörpers bzw. des Spannelements in unterschiedlichen Winkelanordnungen Klemmflächen bzw. Segmente von verschiedenen Konturen von Nutvarianten angeordnet. Dabei ist zunächst eine Klemmfläche zu einer engsten Kontur einer Nutvariante angeordnet. Danach folgt entgegen der Drehrichtung zum Festklemmen des Sensors die nächste Klemmfläche mit einer anderen geometrisch weiteren Kontur einer Nutvariante. Danach können weitere Klemmflächen für weitere unterschiedliche Nutvarianten angeordnet sein. Je nach Form der Nut sind daher bei unterschiedlichen Nuten eine Lösestellung und eine Klemmstellung verschieden.

Gemäß der Erfindung ist der Klemmkörper zwischen den Innenflächen der Befestigungsnut und/oder unter den Nutschultern befestigbar.

So wird eine sichere Fixierung des Sensors in einer Vielzahl verschiedener Nutvarianten erreicht.

Der Klemmkörper ist mit dem Sensorgehäuse drehbar verbunden. Hierzu kann z. B. ein kegelförmiges Unterteil des Klemmkörpers im Sensorgehäuse als Einlegeteil verspritzt werden, so dass das kegelförmige Unterteil drehbar gelagert ist. Weitere Möglichkeiten ergeben sich für eine nachträgliche Montage mittels Schraube, Lagerbolzen oder ähnliches.

Der Klemmkörper kann an den Klemmflächen, deren Funktion das Verspannen in der Nut ist, mit einem Rändel, einer Rändelstruktur oder mit einer aufgerauten Fläche ausgeführt werden, um die Reibung zwischen Klemmkörper und Nutoberfläche zu erhöhen. Eine Orientierung der Rändelstruktur kann beliebig sein, jedoch vorzugsweise in Richtung der Drehachse bzw. quer zur Drehrichtung des Klemmkörpers.

Gemäß der Erfindung ist das Sensorgehäuse sehr einfach ausgeführt, da lediglich mindestens ein einziger Klemmkörper notwendig ist. Lediglich bei längeren Sensorgehäusen können auch mehrere, beispielsweise zwei Klemmkörper, vorgesehen sein, die dann vorzugsweise an den jeweiligen Enden des Sensorgehäuses angeordnet sind.

Gemäß der Erfindung kann das Sensorgehäuse in einer Vielzahl von C-Nut Varianten befestigt werden mit einem einzigen Klemmkörper. Damit ist nur ein einstückiger Klemmkörper notwendig, um das Sensorgehäuse zu befestigen.

Die Lösung ist platzsparend und preisgünstig.

In Weiterbildung der Erfindung sind mindestens zwei Klemmflächen in Richtung der Drehachse nacheinander, übereinander oder hintereinander angeordnet. Die Klemmflächen dieser Ausführungsform sind damit zur Drehrichtung übereinander oder parallel nebeneinander zur Drehrichtung angeordnet.

Gemäß einer bevorzugten Ausführungsform der Erfindung sind mindestens zwei Klemmflächen jeweils als Steigungsflächen ausgebildet, wobei die Steigung gegenüberliegender Klemmflächen identisch ist und wobei die Steigung der Klemmflächen auf einer Seite des Klemmkörpers insbesondere unterschiedlich ist.

Zwar kann es auch vorgesehen sein, dass die Steigung der Klemmflächen auf einer Seite des Klemmkörpers gleich ist, jedoch ist es bevorzugt vorgesehen, dass eine Steigung unterschiedlich ist.

Beispielsweise zum Verspannen unter der Nutschulter in vertikaler Richtung sind die entsprechenden Klemmflächen am Klemmkörper bzw. am Spannelement als Steigungsflächen ausgeführt, so dass bei zunehmenden Drehwinkel des Klemmkörpers die Verspannung ebenfalls zunimmt und so das Spannelement festgezogen werden kann. Der Durchmesser der Klemmflächenoberfläche nimmt dabei entgegen der Drehrichtung zur Befestigung zu.

In Weiterbildung der Erfindung weisen mindestens zwei Klemmflächen jeweils in radialer Richtung eine exzentrische Form auf, wobei die exzentrische Form gegenüberliegender Klemmflächen identisch ist und die exzentrische Form der Klemmflächen auf einer Seite des Klemmkörpers unterschiedlich ist.

Um den Klemmkörper bzw. das Spannelement seitlich in der Nut verspannen zu können, sind die Klemmflächen bzw. die Konturen in radialer Richtung exzenterartig ausgeführt. Damit nimmt die Spannkraft zwischen dem Klemmkörper und der Nutwand mit der Drehrichtung des Klemmkörpers bei der Befestigung zu, was zu einer sicheren Befestigung führt.

In Weiterbildung der Erfindung weisen mindestens zwei auf einer Seite des Klemmkörpers liegende Klemmflächen unterschiedliche Radien auf. Die Radien vergrößern sich dabei entgegen der Drehrichtung zur Befestigung, so dass bei der Befestigung zunächst der kleinere Radius greift und danach in Drehrichtung der größere Radius zur Befestigung genutzt wird.

In Weiterbildung der Erfindung weisen mindestens zwei auf einer Seite des Klemmkörpers liegende Klemmflächen unterschiedliche Flächengröße auf. Dadurch werden die jeweiligen Klemmflächen an jeweils unterschiedliche Nutformen bzw. Nutgeometrien angepasst.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 und 3: ein Sensorgehäuse zur Befestigung in einer Nut;
- Figur 2: einen Teil eines Sensorgehäuse mit einem Klemmkörper;
- Figur 4 und 5: jeweils einen Klemmkörper mit Klemmflächen;
- Figur 6 bis 10: jeweils ein Sensorgehäuse zur Befestigung in einer jeweils unterschiedlichen Nut;
- Figur 11: eine schematische Darstellung eines Klemmkörpers mit einem kegelförmigen Unterteil.

In den nachfolgenden Figuren sind identische Teile mit identischen Bezugszeichen versehen.

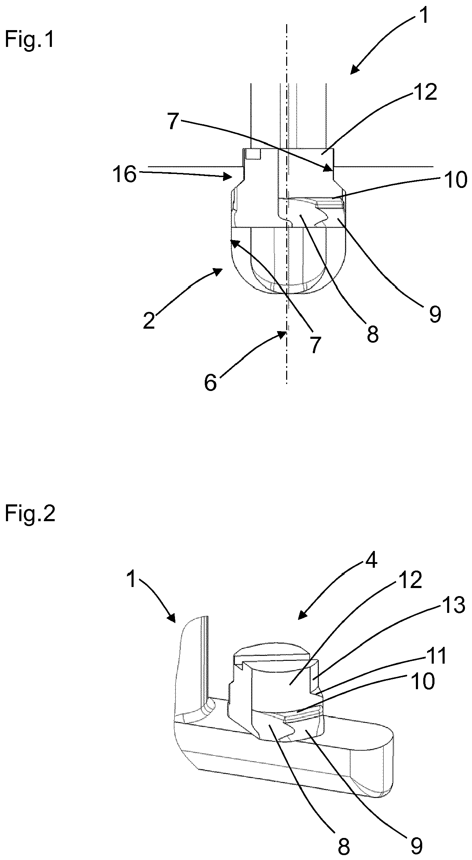

Figur 1 zeigt ein Sensorgehäuse 1 mit mindestens einem Sensorelement, wobei ein Teil des Sensorgehäuses 1 in eine Befestigungsnut 2 eines metallischen Befestigungskörpers 3 ragt zur Befestigung des Sensorgehäuses 1, wobei an dem Sensorgehäuse 1 ein drehbarer Klemmkörper 4 vorgesehen ist, wobei der Klemmkörper 4 ein Betätigungselement 5 zur Drehung des Klemmkörpers 4 aufweist, wobei eine Drehachse 6 für den Klemmkörper 4 quer zu einer Längsachse der Befestigungsnut 2 liegt, wobei der Klemmkörper bei in die Befestigungsnut 2 eingesetztem Sensorgehäuse 1 durch Verdrehen in eine Klemmstellung verbringbar ist, in der dieser mit gegenüberliegenden Innenflächen 7 der Befestigungsnut 2 verspannbar ist, wobei der Klemmkörper 4 mindestens vier bezüglich seiner Drehachse 6 radial nach außen weisenden Klemmflächen 8, 9, 10, 12 aufweist, die sich an bezüglich der Drehachse gegenüberliegenden Stellen des Klemmkörpers 4 befinden, über die der Klemmkörper 4 in einer Klemmstellung zwischen den Innenflächen 7 der Nutwand 12 verspannbar ist, wobei jeweils zwei Klemmflächen gegenüberliegend angeordnet sind, wobei mindestens zwei Klemmflächen 8, 9, 10, 11, 12, die auf einer Seite des Klemmkörpers angeordnet sind, jeweils unterschiedliche Winkel zur Drehachse 6 aufweisen.

Gemäß Figur 1 sind am Umfang des Klemmkörpers 4 bzw. des Spannelements in unterschiedlichen Winkelanordnungen Klemmflächen 8, 9, 10, 11, 12 bzw. Segmente von verschiedenen Konturen von Nutvarianten angeordnet.

Gemäß Figur 1 ist zunächst eine Klemmfläche 12 zu einer engsten Kontur einer Nutvariante angeordnet. Darunter in Richtung der Drehachse ist eine Klemmfläche 8 angeordnet. Danach folgt entgegen der Drehrichtung zum Festklemmen des Sensors die nächste Klemmfläche 9 mit einer anderen geometrisch weiteren Kontur einer Nutvariante. Weiter können weitere Klemmflächen 10, 11 für weitere unterschiedliche Nutvarianten angeordnet sein, wie dies auch in Figur 2 dargestellt ist.

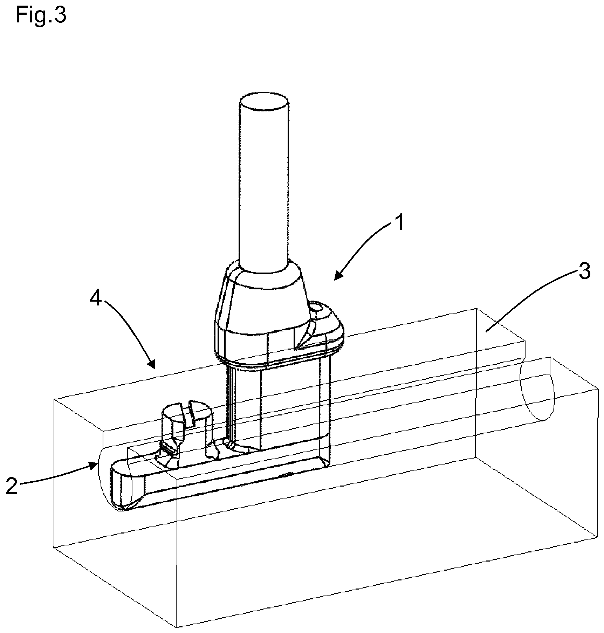

Figur 3 zeigt das Sensorgehäuse 1 mit dem Klemmkörper 4 in einer Befestigungsnut 2 eines Befestigungskörpers 3.

Gemäß Figur 1 ist der Klemmkörper zwischen den Innenflächen 7 der Befestigungsnut 2 und/oder unter den Nutschultern 16 befestigbar.

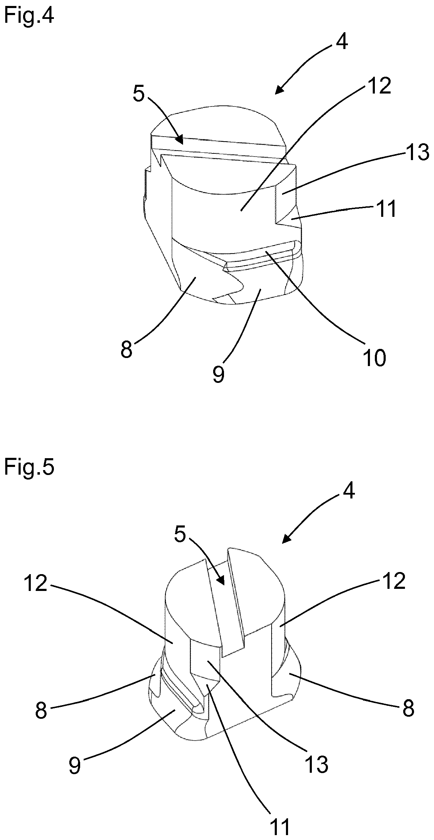

Gemäß Figur 4 und Figur 5 sind mindestens zwei Klemmflächen 8 oder 12, 9, 10 oder 12 in Richtung der Drehachse nacheinander angeordnet. Die Klemmflächen 8 oder 12, 9, 10 oder 12 dieser Ausführungsform sind damit zur Drehrichtung übereinander oder parallel nebeneinander zur Drehrichtung angeordnet.

Gemäß Figur 4 sind mindestens zwei Klemmflächen 8 und 12 jeweils als Steigungsflächen ausgebildet, wobei die Steigung gegenüberliegender Klemmflächen identisch ist und wobei die Steigung nicht gegenüberliegender Klemmflächen 8 und 12, die also auf einer Seite des Klemmkörpers 4 angeordnet sind, unterschiedlich ist.

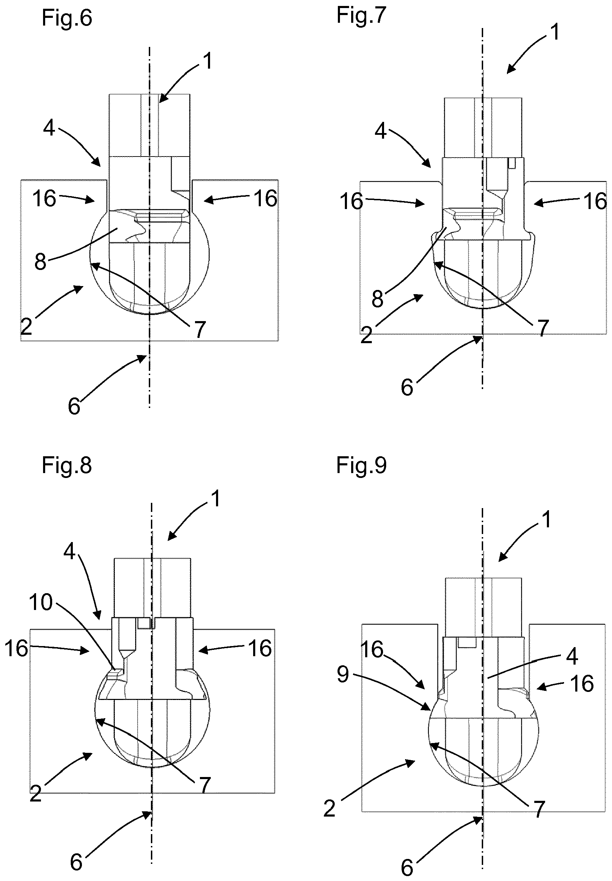

Zum Verspannen unter der Nutschulter in vertikaler Richtung gemäß Figur 9 sind die entsprechenden Klemmflächen z. B. 8 und 9 am Klemmkörper 4 bzw. am Spannelement als Steigungsflächen ausgeführt, so dass bei zunehmenden Drehwinkel des Klemmkörpers 4 die Verspannung ebenfalls zunimmt und so der Klemmkörper bzw. das Spannelement festgezogen werden kann. Der Durchmesser der Klemmflächenoberfläche nimmt dabei entgegen der Drehrichtung zur Befestigung zu.

Gemäß Figur 4 weisen mindestens zwei Klemmflächen 12 und 8 jeweils in radialer Richtung eine exzentrische Form auf, wobei die exzentrische Form gegenüberliegender Klemmflächen identisch ist und die exzentrische Form nicht gegenüberliegender Klemmflächen auf einer Seite des Klemmkörpers 4 unterschiedlich ist.

Gemäß Figur 4 weisen mindestens zwei nicht gegenüberliegende Klemmflächen 12 und 9, die auf einer Seite liegen, unterschiedliche Radien auf. Die Radien vergrößern sich dabei entgegen der Drehrichtung zur Befestigung, so dass bei der Befestigung zunächst der kleinere Radius greift und danach in Drehrichtung der größere Radius zur Befestigung genutzt wird.

Gemäß Figur 4 weisen mindestens zwei nicht gegenüberliegende Klemmflächen, beispielsweise 8 und 10 oder 9 und 10, auf einer Seite des Klemmkörpers unterschiedliche Flächengröße auf.

Figur 6 zeigt den Klemmkörper 4 in einer Grundstellung, so dass das Sensorgehäuse 1 von oben direkt in die Befestigungsnut 2 eingeführt werden kann.

Um den Klemmkörper 4 bzw. das Spannelement gemäß Figur 7 seitlich in der Nut verspannen zu können, sind die Klemmflächen, z. B. Klemmfläche 8, bzw. die Konturen in radialer Richtung exzenterartig ausgeführt. Damit nimmt die Spannkraft zwischen dem Klemmkörper 4 und der Nutwand bzw. den Innenflächen 7 der Nut mit der Drehrichtung des Klemmkörpers 4 bei der Befestigung zu, was zu einer sicheren Befestigung führt.

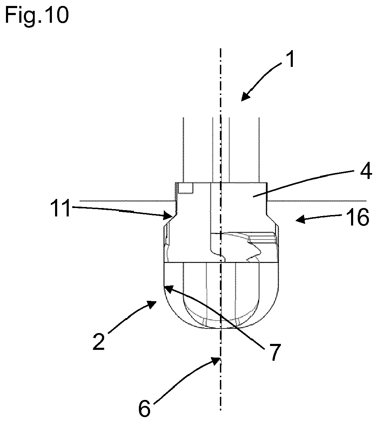

Verschiedene Nutvarianten sind in den Figuren 6 bis 10 dargestellt. Dabei wird die Klemmung gemäß den Figuren 7 bis 10 jeweils durch eine verschiedene Klemmfläche erreicht. Gemäß Figur 7 durch die Klemmfläche 8. Gemäß Figur 8 durch die Klemmfläche 10, gemäß Figur 9 durch die Klemmfläche 9 und gemäß Figur 10 durch die Klemmfläche 11.

Gemäß den Figuren 7 bis 10 kann das Sensorgehäuse in einer Vielzahl von C-Nut Varianten befestigt werden mit einem jeweils einzigen einstückigen Klemmkörper 4.

Die Klemmkörper 4 gemäß den Figuren 1 bis 11 können an den Klemmflächen, deren Funktion das Verspannen in der Nut ist, mit einem Rändel, einer Rändelstruktur oder mit einer aufgerauten Fläche ausgeführt werden.

Gemäß einem nicht dargestellten Ausführungsbeispiel können bei längeren Sensorgehäusen auch mehrere, beispielsweise zwei Klemmkörper, vorgesehen sein, die dann vorzugsweise an den jeweiligen Enden des Sensorgehäuses angeordnet sind.

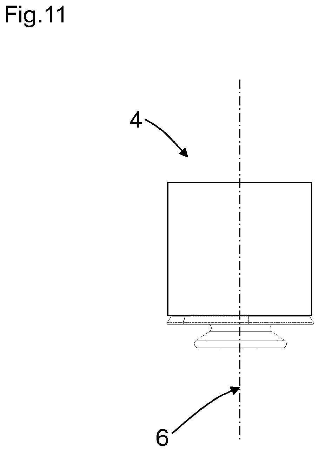

Der Klemmkörper 4 ist mit dem Sensorgehäuse 1 drehbar verbunden. Hierzu kann z. B. gemäß Figur 11 ein kegelförmiges Unterteil des Klemmkörpers im Sensorgehäuse als Einlegeteil verspritzt werden, so dass das kegelförmige Unterteil drehbar gelagert ist.

### Bezugszeichen:

1 Sensorgehäuse
2 Befestigungsnut
3 Befestigungskörper
4 Klemmkörper
5 Betätigungselement
6 Drehachse
7 Innenflächen
8, 9, 10, 11, 12, 13 Klemmflächen
16 Nutschultern

## Patentansprüche

1. Sensorgehäuse (1) mit mindestens einem Sensorelement, wobei ein Teil des Sensorgehäuses (1) in eine Befestigungsnut (2) eines metallischen Befestigungskörpers (3) ragt zur Befestigung des Sensorgehäuses (1), wobei an dem Sensorgehäuse (1) ein drehbarer Klemmkörper (4) vorgesehen ist, wobei der Klemmkörper (4) ein Betätigungselement (5) zur Drehung des Klemmkörpers (4) aufweist, wobei eine Drehachse (6) für den Klemmkörper (4) quer zu einer Längsachse der Befestigungsnut (2) liegt, wobei der Klemmkörper bei in die Befestigungsnut (2) eingesetztem Sensorgehäuse (1) durch Verdrehen in eine Klemmstellung verbringbar ist, in der dieser mit gegenüberliegenden Innenflächen (7) der Befestigungsnut (2) verspannbar ist,
wobei der Klemmkörper (4) mindestens vier bezüglich seiner Drehachse (6) radial nach außen weisenden Klemmflächen (8, 9, 10, 11, 12, 13) aufweist, die sich an bezüglich der Drehachse gegenüberliegenden Stellen des Klemmkörpers (4) befinden, über die der Klemmkörper (4) in einer Klemmstellung zwischen den Innenflächen (7) der Nutwand (12) verspannbar ist, wobei jeweils zwei Klemmflächen gegenüberliegend angeordnet sind,
**dadurch gekennzeichnet, dass** mindestens zwei Klemmflächen (8, 9, 10, 11, 12, 13), die auf einer Seite des Klemmkörpers angeordnet sind, jeweils unterschiedliche Winkel zur Drehachse (6) aufweisen.

2. Sensorgehäuse nach Anspruch 1, **dadurch gekennzeichnet, dass** mindestens zwei Klemmflächen (8, 9, 10, 11, 12, 13) in Richtung der Drehachse (6) nacheinander angeordnet sind.

3. Sensorgehäuse nach mindestens einem der vorhergehenden Ansprüche,
**dadurch gekennzeichnet, dass** mindestens zwei Klemmflächen (8, 9, 10, 11, 12, 13) jeweils als Steigungsflächen ausgebildet sind, wobei die Steigung gegenüberliegender Klemmflächen identisch ist und wobei die Steigung der Klemmflächen (8, 9, 10, 11, 12, 13) auf einer Seite des Klemmkörpers insbesondere unterschiedlich ist.

4. Sensorgehäuse nach mindestens einem der vorhergehenden Ansprüche,
**dadurch gekennzeichnet, dass** mindestens zwei Klemmflächen (8, 9, 10, 11, 12, 13) jeweils in radialer Richtung eine exzentrische Form aufweisen, wobei die exzentrische Form gegenüberliegender Klemmflächen identisch ist und die exzentrische Form der Klemmflächen (8, 9, 10, 11, 12, 13) auf einer Seite des Klemmkörpers unterschiedlich ist.

5. Sensorgehäuse nach mindestens einem der vorhergehenden Ansprüche,
**dadurch gekennzeichnet, dass** mindestens zwei auf einer Seite des Klemmkörpers liegende Klemmflächen (8, 9, 10, 11, 12, 13) unterschiedliche Radien aufweisen.

6. Sensorgehäuse nach mindestens einem der vorhergehenden Ansprüche,
**dadurch gekennzeichnet, dass** mindestens zwei auf einer Seite des Klemmkörpers liegende Klemmflächen (8, 9, 10, 11, 12, 13) unterschiedliche Flächengröße aufweisen.
